# DEMANDE DE BREVET EUROPEEN

(11) **EP 4 838 412 A1**
(43) Date de publication de la demande: **11.11.2026**
(21) Numéro de dépôt: 26174383.5
(22) Date de dépôt: 24.04.2026
(51) Int. Cl.: G06N 3/045, G06N 3/088, G06N 3/096

(54) **PROCÉDÉ DE TRANSFERT DE CONNAISSANCES D'UN PREMIER RÉSEAU DE NEURONES MULTICOUCHES VERS UN DEUXIÈME RÉSEAU DE NEURONES MULTICOUCHES, ET SYSTÈME DE TRAITEMENT D'IMAGES METTANT EN OEUVRE UN TEL PROCÉDÉ**

(30) Priorité: 06.05.2025 FR 2504784
(71) Demandeur: Ampere SAS, 92100 Boulogne-Billancourt (FR); Institut National Polytechnique de Toulouse, 31400 Toulouse (FR); Université de Toulouse, 31400 Toulouse (FR)
(72) Inventeur: GAMBOA, Fabrice, 31400 TOULOUSE (FR); GIACCONE, Thierry, 31100 TOULOUSE (FR); GRATTON, Serge, 31071 TOULOUSE (FR); NGUYEN, Hai-Vy, 31100 TOULOUSE (FR)
(74) Mandataire: Yes My Patent

(57) **Abrégé**

L'invention concerne un procédé, mis en œuvre par ordinateur (10), de transfert de connaissances d'un premier réseau de neurones multicouches (24) vers un deuxième réseau de neurones multicouches (25), le premier réseau de neurones (24) ayant été entraîné au préalable et présentant une série de poids synaptiques fixés, les valeurs des poids synaptiques du deuxième réseau de neurones (25) étant initialisées avec des valeurs initiales, la sortie de chaque couche du premier réseau de neurones multicouches (24) et du deuxième réseau de neurones multicouches (25) étant apte à être représentée sous forme fonctionnelle.

L'invention concerne également un système (10) de traitement d'images pour la mise en œuvre d'un tel procédé.

## Description

### Domaine technique de l'invention

La présente invention concerne le domaine du transfert de connaissances d'un premier réseau de neurones multicouches vers un deuxième réseau de neurones multicouches, les premier et deuxième réseaux de neurones multicouches étant destinés à réaliser des tâches identiques ou des tâches différentes mais liées. L'invention concerne en particulier un procédé de transfert de connaissances d'un premier réseau de neurones multicouches vers un deuxième réseau de neurones multicouches et un système de traitement d'images stockant deux tels réseaux de neurones multicouches et mettant en œuvre un tel procédé de transfert de connaissances entre les deux réseaux de neurones multicouches. L'invention concerne également un programme d'ordinateur mettant en œuvre un tel procédé, ainsi qu'un support utilisable dans un ordinateur dans lequel un tel programme d'ordinateur est enregistré.

### État de la technique antérieure

Pour certaines applications, notamment celles nécessitant une rapidité de traitement pour les données, il n'est pas possible d'utiliser des réseaux de neurones de grande taille. Il faut donc utiliser des réseaux de neurones de plus petite taille tout en assurant de bonnes performances, d'où l'idée connue d'effectuer un transfert de connaissances d'un premier réseau de neurones multicouches vers un deuxième réseau de neurones multicouches (ce transfert de connaissances étant aussi appelé « knowledge distilling » en anglais). Le premier réseau de neurones est usuellement appelé réseau de neurones « enseignant », et le deuxième réseau de neurones, réseau de neurones « élève ». Le réseau de neurones « élève » est ainsi généralement plus petit en taille (i.e. en nombre de neurones et/ou de couches qu'il contient) que le réseau de neurones « enseignant », et est donc plus efficace pour la réalisation d'une tâche donnée. Dans ce cas de figure particulier toutefois, l'entraînement du réseau de neurones « élève » est plus difficile à effectuer (pour certaines tâches) que celui du réseau de neurones « enseignant », ce qui justifie le recours à un procédé de transfert de connaissances entre les deux réseaux de neurones. À un niveau macroscopique, le processus de transfert de connaissances consiste à apprendre au réseau de neurones « élève » à imiter la façon dont le réseau de neurones « enseignant » comprend les données d'entrée. Cela est généralement effectué à l'aide d'un ensemble de données de transfert, le réseau de neurones « enseignant » ayant été entraîné au préalable à l'aide de données de préférence labellisées (i.e avec étiquettes). Tout se passe alors comme si le réseau de neurones « élève » était entraîné à se comporter, d'une certaine manière, comme le réseau de neurones « enseignant » sur l'ensemble de données de transfert.

Une approche possible connue concernant le transfert de connaissances en lui-même consiste à effectuer un transfert de représentations de caractéristiques. Cela permet au réseau de neurones « élève » de mieux capturer les relations entrée-entrée représentées dans l'espace des caractéristiques du réseau de neurones « enseignant », en préservant sa géométrie et sa distribution, ce qui conduit à un transfert de connaissances plus efficace. De plus, il convient de noter que cette approche est une méthode de transfert de connaissances non supervisée, car elle utilise uniquement un ensemble de données de transfert non labellisées (i.e. sans étiquettes). Les différentes caractéristiques apprises peuvent en outre être utilisées pour diverses tâches en aval.

Une autre approche connue, décrite par exemple dans le document « Distilling the knowledge in a neural network - G. Hinton, O. Vinyals, and J. Dean. arXiv preprint arXiv:1503.02531, 2015 » consiste en ce que le réseau de neurones « enseignant » produise un étiquetage « souple ». Plus précisément, une telle approche consiste à utiliser les sorties de modèles de classification, avec une température, ce qui rend les étiquettes souples moins « saillantes ». Ceci conduit donc à des étiquettes souples plus lisses. Dans le même esprit, le document « Transferring knowledge from a rnn to a dnn - W. Chan, N. R. Ke, and I. Lane. arXiv preprint arXiv:1504.01483, 2015 » propose d'adapter les distributions de sortie en utilisant la divergence de Kullback-Leibler. L'étiquetage souple a également été utilisé dans le cadre de l'adaptation de domaine, comme le décrit typiquement le document « Simultaneous deep transfer across domains and tasks. - E. Tzeng, J. Hoffman, T. Darrell, and K. Saenko. In Proceedings of the IEEE international conference on computer vision, pages 4068-4076, 2015 ». Si toutes ces méthodes démontrent l'intérêt des étiquettes souples pour une meilleure généralisation du transfert de connaissances, leurs applications sont assez limitées en raison de l'exigence qu'elles imposent d'avoir le même nombre de classes entre les deux réseaux de neurones.

Une autre approche connue pour le transfert de connaissances d'un premier réseau de neurones multicouches vers un deuxième réseau de neurones multicouches consiste en une méthode par correspondance de distances. Dans cet esprit, le document « Fitnets: Hints for thin deep nets - A. Romero, N. Ballas, S. E. Kahou, A. Chassang, C. Gatta, and Y. Bengio. arXiv preprint arXiv:1412.6550, 2014 » propose de minimiser la norme euclidienne entre les caractéristiques du réseau de neurones « élève » et celles du réseau de neurones « enseignant » afin de guider le réseau de neurones « élève » pendant l'apprentissage. Cependant, en cas de discordance dimensionnelle entre les modèles, une transformation linéaire est nécessaire, ce qui entraîne une perte d'information substantielle. Le document « A gift from knowledge distillation: Fast optimization, network minimization and transfer learning. - J. Yim, D. Joo, J. Bae, and J. Kim. In Proceedings of the IEEE conference on computer vision and pattern recognition, pages 4133-4141, 2017 » propose quant à lui de minimiser la distance d'une matrice appelée « matrice FSP » (de l'anglais « Flow of Solution Procedure ») entre les réseaux de neurones « enseignant » et « élève », permettant ainsi de capturer les relations inter-couches. De manière plus avancée, le document « Sobolev training for neural networks - W. M. Czarnecki, S. Osindero, M. Jaderberg, G. Swirszcz, and R. Pascanu. Advances in neural information processing systems, 30, 2017 » propose de minimiser les dérivées par rapport aux caractéristiques, en plus de la distance entre les caractéristiques elles-mêmes. Là encore, ces dernières méthodes requièrent une concordance dimensionnelle et une interpolation en cas de discordance dimensionnelle. Afin de surmonter l'inconvénient de l'inadéquation dimensionnelle, le document « Unsupervised knowledge transfer using similarity embeddings - N. Passalis and A. Tefas. IEEE transactions on neural networks and learning systems, 30(3):946-950, 2018 » propose d'apparier une matrice de similarité par paires de points d'apprentissage (dans l'ensemble de données de transfert) entre les réseaux de neurones « enseignant » et « élève ». Le document « Learning metrics from teachers: Compact networks for image embedding - L. Yu, V. O. Yazici, X. Liu, J. v. d. Weijer, Y. Cheng, and A. Ramisa. In Proceedings of the IEEE / CVF Conference on Computer Vision and Pattern Recognition, pages 2907-2916, 2019 » propose quant à lui d'apparier la distance entre des paires d'échantillons. Cependant, comme l'ont démontré certains travaux de l'art antérieur, cette approche par force brute a peu de chances de fonctionner, car le réseau de neurones « élève » est beaucoup plus petit en taille que le réseau de neurones « enseignant ». Par conséquent, en termes de pouvoir de représentation, il est quasiment impossible pour le réseau de neurones « élève » d'apprendre à produire la même géométrie que le réseau de neurones « enseignant ».

Une dernière approche connue consiste en un transfert de représentations sur la base de méthodes probabilistiques. Dans cette optique, certaines méthodes traitent le transfert de représentations comme un problème d'appariement de distribution, basé sur l'écart moyen maximal ou l'apprentissage contradictoire. Cette dernière méthode s'inspire des réseaux antagonistes génératifs, aussi appelés réseaux GAN (de l'anglais « Generative Adversarial Networks »). Toutefois, un inconvénient majeur de l'appariement de distribution est la nécessité d'avoir la même dimension (ou taille) entre les deux réseaux de neurones multicouches. En pratique, cette exigence n'est pas satisfaite dans le contexte d'un transfert léger, où le réseau de neurones « élève » est beaucoup plus petit en taille que le réseau de neurones « enseignant ». De plus, en termes de puissance de représentation, il n'est pas réaliste que le réseau de neurones « élève » produise une distribution indiscernable de celle produite par le réseau de neurones « enseignant ». Afin de pallier l'inconvénient de l'inadéquation dimensionnelle, le document « Variational information distillation for knowledge transfer - S. Ahn, S. X. Hu, A. Damianou, N. D. Lawrence, and Z. Dai. In Proceedings of the IEEE / CVF conference on computer vision and pattern recognition, pages 9163-9171, 2019 » propose un cadre probabiliste basé sur la maximisation de l'information mutuelle. Cependant, une telle méthode impose une hypothèse gaussienne, qui n'est pas nécessairement vérifiée en pratique. Pour surmonter l'exigence d'appariement dimensionnel, le document « Learning deep representations with probabilistic knowledge transfer - N. Passalis and A. Tefas. In Proceedings of the European Conference on Computer Vision (ECCV), pages 268-284, 2018 » propose une méthode probabiliste de transfert de représentation. Basée sur des techniques de noyaux, l'idée principale de cette dernière méthode est de transférer au réseau de neurones « élève » la géométrie locale apprise par le réseau de neurones « enseignant ». D'autres méthodes connues consistent à appliquer une telle technique à plusieurs couches intermédiaires du réseau de neurones « élève ». Ces deux dernières méthodes utilisent également un réseau de neurones (ou modèle) auxiliaire, ce qui semble faciliter la distillation des connaissances, mais ce qui complexifie le processus et entraîne un manque de flexibilité.

### Résumé de l'invention

L'invention vise à remédier à ces défauts. Elle a notamment pour but de proposer un procédé de transfert de connaissances d'un premier réseau de neurones multicouches vers un deuxième réseau de neurones multicouches, qui consiste en un transfert de représentations, qui permette d'obtenir un transfert plus précis et cohérent tout en impliquant une mise en œuvre simple et flexible, et qui permette de s'affranchir de tout problème d'inadéquation dimensionnelle en permettant un transfert de représentations entre espaces de dimensions différentes (autrement dit permettant un transfert de représentations efficient lorsque les premier et deuxième réseaux de neurones multicouches présentent des tailles différentes). Un autre but de l'invention est de proposer un tel procédé de transfert de connaissances qui permette d'atteindre ces résultats tout en nécessitant moins de ressources de calcul.

Pour atteindre ce but, l'invention concerne, selon un premier aspect, un procédé, mis en œuvre par ordinateur, de transfert de connaissances d'un premier réseau de neurones multicouches vers un deuxième réseau de neurones multicouches, l'ordinateur comprenant des moyens de traitement et des moyens mémoire reliés aux moyens de traitement, les moyens mémoire stockant ledit premier réseau de neurones, ledit deuxième réseau de neurones, un ensemble de données de transfert, et un module de calcul configuré pour appliquer sur des données au moins une métrique de dissimilarité, une fonction de perte, et une fonction d'opération de classement souple, le premier réseau de neurones ayant été entraîné au préalable et présentant une série de poids synaptiques fixés, les valeurs des poids synaptiques du deuxième réseau de neurones étant initialisées avec des valeurs initiales, la sortie de chaque couche du premier réseau de neurones multicouches et du deuxième réseau de neurones multicouches étant apte à être représentée sous forme fonctionnelle, l'ensemble de données de transfert étant segmenté en plusieurs sous-ensembles de données de transfert, chaque sous-ensemble comprenant un nombre N1 de données de transfert, N1 étant un entier non nul, le procédé comprenant les étapes suivantes :
i) sélection d'une couche du premier réseau de neurones multicouches, appelée première couche, et d'une couche du deuxième réseau de neurones multicouches, appelée deuxième couche ;
ii) représentation fonctionnelle de la sortie de la première couche et de la sortie de la deuxième couche, la représentation fonctionnelle de la sortie de la première couche correspondant à une première fonction, la représentation fonctionnelle de la sortie de la deuxième couche correspondant à une deuxième fonction ;
iii) pour chaque sous-ensemble de données de transfert de l'ensemble de données de transfert :
   a. application de la première fonction, respectivement de la deuxième fonction, à chaque donnée dudit sous-ensemble de données de transfert, fournissant une valeur calculée de la première fonction, respectivement de la deuxième fonction, pour ladite donnée ;
   b. application d'une première métrique de dissimilarité à chaque couple possible de valeurs calculées pour la première fonction, fournissant une valeur de dissimilarité pour ledit couple, l'ensemble des valeurs de dissimilarité calculées pour la première fonction étant représenté sous la forme de N1 premiers vecteurs ;
   c. application d'une deuxième métrique de dissimilarité à chaque couple possible de valeurs calculées pour la deuxième fonction, fournissant une valeur de dissimilarité pour ledit couple, l'ensemble des valeurs de dissimilarité calculées pour la deuxième fonction étant représenté sous la forme de N1 deuxièmes vecteurs ;
   d. application de la fonction d'opération de classement souple aux N1 premiers vecteurs, respectivement aux N1 deuxièmes vecteurs, fournissant N1 troisièmes vecteurs, respectivement N1 quatrièmes vecteurs ;
   e. application de la fonction de perte aux N1 troisièmes vecteurs et aux N1 quatrièmes vecteurs, fournissant une valeur calculée pour la fonction de perte ;
   f. minimisation de ladite valeur calculée pour la fonction de perte, par ajustement des valeurs de poids synaptiques du deuxième réseau de neurones multicouches ;
   g. fixation des poids synaptiques du deuxième réseau de neurones multicouches sur les valeurs qui minimisent ladite valeur calculée pour la fonction de perte.

La « fonction d'opération de classement souple » (aussi appelée « soft ranking function » en anglais) consiste, pour un vecteur d'entrée donné, à donner un rang pour chaque composante dans ce vecteur d'entrée, fournissant donc un vecteur de rang de la même dimension que le vecteur d'entrée. Une telle « fonction d'opération de classement souple » consiste ainsi en une approximation différentiable d'une opération de tri ou de classement selon laquelle on cherche à ordonner des éléments (documents, produits, etc.) selon une pertinence prédite. Elle remplace un « classement dur » (basé sur un tri exact) par un classement fluide, calculé via une transformation continue qui reste proche d'un vrai rang tout en restant dérivable, donc utilisable pour entraîner un réseau de neurones. Une « fonction d'opération de classement souple » est par conséquent une approximation continue et différentiable du classement d'éléments, utilisée dans les réseaux de neurones pour rendre optimisables les pertes basées sur le rang. Une telle « fonction d'opération de classement souple » est complètement distincte d'une « étiquette souple », cette dernière désignant en effet une distribution de probabilité sur des classes d'un échantillon donné (fournissant ainsi des données labellisées), et non une approximation différentiable d'une opération de tri ou de classement selon laquelle on cherche à ordonner des éléments selon une pertinence prédite.

Selon une variante, les données de l'ensemble de données de transfert sont des données non labellisées.

Selon une autre variante, la première métrique de dissimilarité et/ou la deuxième métrique de dissimilarité consiste en un calcul de distance, typiquement en un calcul de distance euclidienne.

Selon encore une autre variante, l'étape de minimisation de la valeur calculée pour la fonction de perte est effectuée à l'aide d'une méthode basée sur le gradient.

Selon encore une autre variante, la première couche et/ou la deuxième couche est la dernière couche ou une couche intermédiaire du premier réseau de neurones multicouches, respectivement du deuxième réseau de neurones multicouches.

Selon encore une autre variante, le nombre de neurones et/ou de couches du deuxième réseau de neurones multicouches est inférieur ou égal au nombre de neurones et/ou de couches du premier réseau de neurones multicouches.

Selon encore une autre variante, la fonction de perte est une norme ou une fonction basée sur un calcul de valeur absolue.

Selon un deuxième aspect, l'invention concerne un système de traitement d'images, comprenant au moins une unité de traitement, ladite au moins une unité de traitement comprenant au moins un processeur et un support de stockage de données et étant configurée pour recevoir en entrée une ou plusieurs images d'entrée et pour fournir en sortie une ou plusieurs images traitées, ledit support de stockage de données stockant un premier réseau de neurones multicouches, un deuxième réseau de neurones multicouches, un ensemble de données de transfert, et un module de calcul configuré pour appliquer sur des données au moins une métrique de dissimilarité, une fonction de perte, et une fonction d'opération de classement souple, le premier réseau de neurones ayant été pré-entraîné et présentant une série de poids synaptiques fixés, les valeurs des poids synaptiques du deuxième réseau de neurones étant initialisées avec des valeurs initiales, la sortie de chaque couche du premier réseau de neurones multicouches et du deuxième réseau de neurones multicouches étant apte à être représentée sous forme fonctionnelle, l'ensemble de données de transfert étant segmenté en plusieurs sous-ensembles de données de transfert, chaque sous-ensemble comprenant un nombre N1 de données de transfert, N1 étant un entier non nul, dans lequel ladite au moins une unité de traitement est configurée pour mettre en œuvre les étapes d'un procédé de transfert de connaissances tel que décrit ci-dessus.

Selon une variante, le support de stockage de données de ladite au moins une unité de traitement stocke en outre un module de prédiction relié au module de calcul, ledit module de prédiction étant configuré pour effectuer une prédiction d'au moins un paramètre relatif aux images d'entrée, sur la base du transfert de connaissances effectué et de ladite ou desdites image(s) d'entrée.

Selon un troisième aspect, l'invention concerne un programme d'ordinateur comprenant des instructions de code de programme pour l'exécution des étapes d'un procédé tel que décrit ci-dessus lorsque ledit programme est exécuté par au moins un processeur.

Selon un quatrième aspect, l'invention concerne un support utilisable dans un ordinateur sur lequel un programme tel que décrit ci-dessus est enregistré.

### Brève description des figures

D'autres caractéristiques et avantages de l'invention apparaîtront à l'examen de la description détaillée ci-après, et des figures annexées, dans lesquelles :
[Fig. 1] est un schéma fonctionnel d'un système de traitement d'images selon l'invention, le système stockant un premier réseau de neurones multicouches et un deuxième réseau de neurones multicouches ;
[Fig. 2] est un logigramme des étapes d'un procédé de transfert de connaissances selon l'invention, mis en œuvre par le système de traitement d'images de la figure 1 ; et
[Fig. 3] est un schéma illustrant une étape du procédé de transfert de connaissances représenté sur la figure 2.

### Description détaillée de l'invention

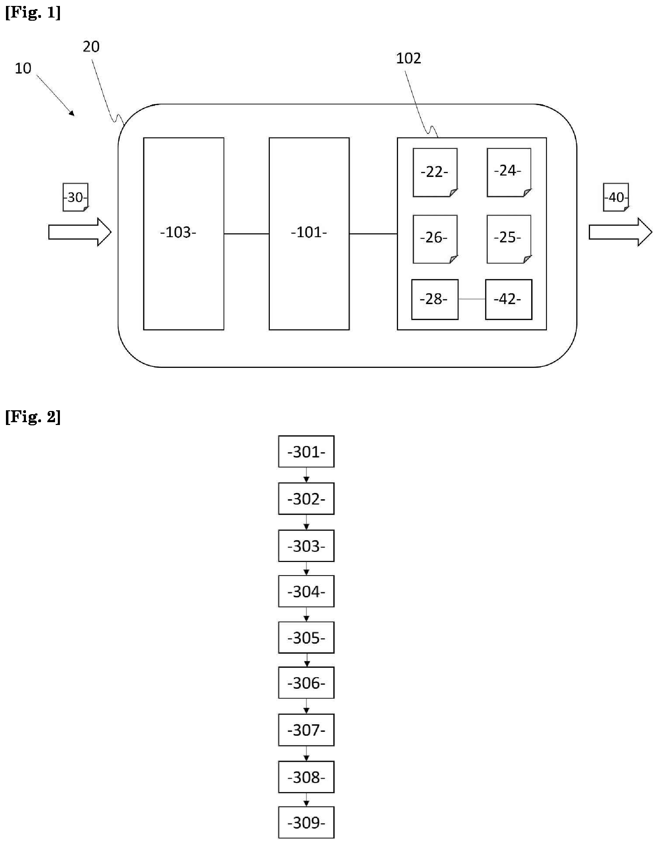

Sur la figure 1 est illustré un système 10 de traitement d'images. Le système 10 est essentiellement un dispositif informatique comprenant une unité de traitement d'informations 20. Il est à noter que le système 10 de traitement d'images représenté sur la figure 1 n'est qu'un exemple parmi d'autres de systèmes aptes à mettre en œuvre le procédé de transfert de connaissances selon l'invention. Plus généralement, un tel procédé de transfert de connaissances peut être mis en ceuvre par tout système informatique muni d'une unité de traitement d'informations (qu'un tel système informatique soit destiné à effectuer du traitement d'images ou non).

L'unité de traitement d'informations 20 comporte un ou plusieurs processeurs 101, un support de stockage de données 102, par exemple une mémoire volatile réinscriptible ou une mémoire non volatile réinscriptible, sur lequel est notamment enregistré un programme 22 qui comprend des instructions de code de programme pour l'exécution des étapes du procédé de traitement d'images décrit ci-après, et une interface d'entrée et sortie 103 permettant la réception et l'émission de données. Sur le support de stockage de données 102 est également stocké un premier réseau de neurones multicouches 24, un deuxième réseau de neurones multicouches 25, un ensemble 26 de données de transfert et un module de calcul 28. L'unité de traitement d'informations 20 est configurée pour recevoir en entrée une ou plusieurs images d'entrée 30 et pour fournir en sortie une ou plusieurs images traitées 40. Le système 10 selon l'invention est, par exemple, un ordinateur, un serveur, un supercalculateur, ou une combinaison de l'un ou plusieurs de ces appareils, possiblement interconnectés au moyen d'un réseau de communication. Le système 10 de traitement d'images est avantageusement configuré pour effectuer des prédictions en temps réel, et comporte également pour ce faire un module de prédiction 42. Le module de prédiction 42 est stocké dans le support de stockage de données 102, est relié au module de calcul 28, et est configuré pour effectuer une prédiction d'au moins un paramètre relatif aux images d'entrée 30, sur la base du transfert de connaissances effectué entre les deux réseaux de neurones multicouches 24, 25 et de la ou des image(s) d'entrée 30.

Le premier réseau de neurones multicouches 24 a été entraîné au préalable et présente une série de poids synaptiques fixés. Ce pré-entraînement du premier réseau de neurones 24 est par exemple effectué sur certaines tâches prédéfinies, potentiellement plus larges que la tâche que l'on souhaite voir effectuée par le deuxième réseau de neurones 25 une fois le transfert de connaissances achevé. La sortie de chaque couche du premier réseau de neurones multicouches 24 et du deuxième réseau de neurones multicouches 25 est apte à être représentée sous forme fonctionnelle. L'ensemble 26 de données de transfert est segmenté en plusieurs sous-ensembles de données de transfert (de tels sous-ensembles étant dénommés « batchs » en anglais), chaque sous-ensemble comprenant un nombre N1 de données de transfert, N1 étant un entier non nul. Sans que cela ne soit limitatif dans le cadre de la présente invention, N1 est par exemple égal à 32 ou 64. De préférence, les données de l'ensemble 26 de données de transfert sont des données non labellisées. De telles données correspondent par exemple à la tâche que l'on souhaite voir effectuée par le deuxième réseau de neurones 25 une fois le transfert de connaissances achevé. De préférence encore, mais sans que cela ne soit limitatif dans le cadre de la présente invention, le nombre de neurones et/ou de couches du deuxième réseau de neurones multicouches 25 est inférieur ou égal au nombre de neurones et/ou de couches du premier réseau de neurones multicouches 24. Dans le mode de réalisation particulier selon lequel le procédé de transfert de connaissances est mis en œuvre par le système 10 de traitement d'images illustré sur la figure 1, les premier et deuxième réseaux de neurones 24, 25 sont par exemple dédiés à effectuer une tâche de traitement d'images, sans que cela ne soit limitatif dans le cadre de la présente invention.

Le module de calcul 28 est notamment configuré pour appliquer sur des données au moins une métrique de dissimilarité, une fonction de perte, et une fonction d'opération de classement souple (cette dernière fonction étant aussi appelée « soft ranking function » en anglais), comme cela sera détaillé par la suite. De préférence, la ou chaque métrique de dissimilarité consiste en un calcul de distance, typiquement en un calcul de distance euclidienne. En variante, toute autre métrique de dissimilarité peut être utilisée dans le cadre de la présente invention. De préférence, la fonction de perte est une norme ou une fonction basée sur un calcul de valeur absolue. En variante, toute autre fonction de perte peut être utilisée dans le cadre de la présente invention. Concernant la fonction d'opération de classement souple, il est à noter que, pour un vecteur d'entrée donné, cette opération consiste à donner un rang pour chaque composante dans ce vecteur d'entrée, fournissant donc un vecteur de rang de la même dimension que le vecteur d'entrée.

Selon l'invention, les éléments décrits ci-dessus contribuent à la mise en œuvre d'un procédé de transfert de connaissances du premier réseau de neurones 24 vers le deuxième réseau de neurones 25, tel que décrit ci-dessous en lien avec la figure 2 qui illustre au moyen d'un logigramme les étapes du procédé de transfert de connaissances selon l'invention.

Au préalable, les valeurs des poids synaptiques du deuxième réseau de neurones 25 sont initialisées avec des valeurs initiales.

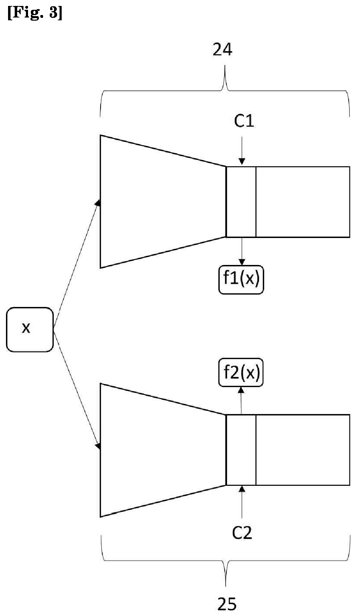

Selon une première étape 301 du procédé selon l'invention, l'unité de traitement d'informations 20 sélectionne une couche du premier réseau de neurones multicouches 24, appelée première couche C1, et une couche du deuxième réseau de neurones multicouches 25, appelée deuxième couche C2. Cette étape de sélection 301 est illustrée sur la figure 3. La couche C1, C2 sélectionnée pour chacun des premier et deuxième réseaux de neurones multicouches 24, 25 dépend de la tâche réalisée par ce réseau de neurones. Par exemple, pour une tâche de classification (i.e. lorsque le premier et/ou le deuxième réseau de neurones 24, 25 est un réseau de neurones de classification), la première couche C1, respectivement la deuxième couche C2, est soit la dernière, soit l'avant-dernière couche du premier réseau de neurones 24, respectivement du deuxième réseau de neurones 25. Plus généralement, la première couche C1 et/ou la deuxième couche C2 est la dernière couche ou une couche intermédiaire du premier réseau de neurones multicouches 24, respectivement du deuxième réseau de neurones multicouches 25.

Selon une étape 302 suivante du procédé selon l'invention, l'unité de traitement d'informations 20 représente fonctionnellement la sortie de la première couche C1 et la sortie de la deuxième couche C2. Cette étape de représentation fonctionnelle 302 est également représentée sur la figure 3, la première couche C1 étant la couche dont on souhaite extraire les représentations, afin de les faire apprendre à la deuxième couche C2. La représentation fonctionnelle de la sortie de la première couche C1 correspond à une première fonction f1, et la représentation fonctionnelle de la sortie de la deuxième couche C2 correspond à une deuxième fonction f2. Ainsi, pour une entrée x donnée dans l'ensemble 26 de données de transfert, f1(x), respectivement f2(x), représente les caractéristiques produites par la première couche C1, respectivement par la deuxième couche C2.

Ensuite le procédé comprend, pour chaque sous-ensemble de données de transfert de l'ensemble 26 de données de transfert, les étapes suivantes :
- selon une étape suivante 303 du procédé selon l'invention, le module de calcul 28 applique la première fonction f1, respectivement la deuxième fonction f2, à chaque donnée du sous-ensemble de données de transfert. Ceci permet de fournir une valeur calculée de la première fonction f1, respectivement de la deuxième fonction f2, pour chaque donnée du sous-ensemble de données de transfert ;
- selon une étape suivante 304 du procédé selon l'invention, le module de calcul 28 applique une première métrique de dissimilarité d1 à chaque couple possible de valeurs calculées pour la première fonction f1 (la première métrique de dissimilarité d1 consiste par exemple en un calcul de distance, typiquement en un calcul de distance euclidienne). Ceci permet de fournir une valeur de dissimilarité d1(f1(xᵢ),f1(xⱼ)), i ≠ j (avec i et j des indices allant de 1 à N1) pour chaque couple possible de valeurs calculées pour la première fonction f1, l'ensemble des valeurs de dissimilarité calculées pour la première fonction f1 étant représenté sous la forme de N1 premiers vecteurs ;
- selon une étape suivante 305 du procédé selon l'invention, le module de calcul 28 applique une deuxième métrique de dissimilarité d2 à chaque couple possible de valeurs calculées pour la deuxième fonction f2 (la deuxième métrique de dissimilarité d2 consiste par exemple en un calcul de distance, typiquement en un calcul de distance euclidienne). Ceci permet de fournir une valeur de dissimilarité d2(f2(xᵢ),f2(xⱼ)), i ≠ j pour chaque couple possible de valeurs calculées pour la deuxième fonction f2, l'ensemble des valeurs de dissimilarité calculées pour la deuxième fonction f2 étant représenté sous la forme de N1 deuxièmes vecteurs ;
- selon une étape suivante 306 du procédé selon l'invention, le module de calcul 28 applique la fonction d'opération de classement souple aux N1 premiers vecteurs, respectivement aux N1 deuxièmes vecteurs, fournissant N1 troisièmes vecteurs, respectivement N1 quatrièmes vecteurs ;
- selon une étape suivante 307 du procédé selon l'invention, le module de calcul 28 applique la fonction de perte aux N1 troisièmes vecteurs et aux N1 quatrièmes vecteurs, fournissant une valeur calculée pour la fonction de perte ;
- selon une étape suivante 308 du procédé selon l'invention, le module de calcul 28 minimise la valeur calculée pour la fonction de perte, par ajustement des valeurs de poids synaptiques du deuxième réseau de neurones multicouches 25 ;
- selon une étape suivante 309 du procédé selon l'invention, le module de calcul 28 fixe les poids synaptiques du deuxième réseau de neurones multicouches 25 sur les valeurs qui minimisent la valeur calculée pour la fonction de perte.

Lorsque le dernier sous-ensemble de données de l'ensemble 26 de données de transfert a été traité, et à l'issue de l'étape 309, le transfert de connaissances depuis le premier réseau de neurones 24 vers le deuxième réseau de neurones 25 est effectué. Dans le mode de réalisation particulier selon lequel le procédé de transfert de connaissances est mis en œuvre par le système 10 de traitement d'images illustré sur la figure 1, une fois le transfert de connaissances effectué du premier réseau de neurones 24 vers le deuxième réseau de neurones 25, le module de prédiction 42 du système 10 peut effectuer une prédiction (en temps quasi réel) d'au moins un paramètre relatif aux images d'entrée 30, sur la base du transfert de connaissances effectué et de la ou des image(s) d'entrée 30. Une telle prédiction est par exemple une détection ou une classification d'un objet particulier présent dans la ou les image(s) d'entrée.

Il est à noter que chaque vecteur parmi les N1 premiers vecteurs et les N1 deuxièmes vecteurs est de dimension N1, correspondant aux dissimilarités entre chaque point (issu de l'application de la fonction f1 ou de la fonction f2 sur une donnée du sous-ensemble de données en question) et tous les autres points dans ce sous-ensemble de données de transfert.

Pour plus de clarté, on va maintenant expliciter ci-dessous certaines bases qui établissent le contexte de l'invention. Pour des questions de concision, on dénomme d1(f1(xᵢ),f1(xⱼ)) : d^{f1}ᵢⱼ d'une part, et d2(f2(xᵢ),f2(xⱼ)) : d^{f2}ᵢⱼ d'autre part.

Chacun des N1 premiers vecteurs est noté D^{f1}ᵢ, qui s'exprime à l'aide de l'équation (1) suivante :
[Math.Eq(1)] ${D}_{i}^{f 1} = {\left({d}_{ij}^{f 1}\right)}_{j = 1}^{N 1}$

De même, chacun des N1 deuxièmes vecteurs est noté D^{f2}ᵢ, qui s'exprime à l'aide de l'équation (2) suivante :
[Math.Eq(2)] ${D}_{i}^{f 2} = {\left({d}_{ij}^{f 2}\right)}_{j = 1}^{N 1}$

Chacun des N1 troisièmes vecteurs est noté R^{f1}ᵢ, qui s'exprime à l'aide de l'équation (3) suivante :
[Math.Eq(3)] ${R}_{i}^{f 1} = {\left({r}_{i}^{f 1}\right)}_{i = 1}^{N 1}$
où rᵢ s'exprime par exemple (selon un exemple de réalisation particulier de la fonction d'opération de classement souple) à l'aide de l'équation (4) suivante :
[Math.Eq(4)] ${r}_{i}^{f 1} = {\sum }_{k = 1}^{N 1} Λ \left(\frac{{d}_{i}^{f 1} - {d}_{k}^{f 1}}{τ}\right)$
où Λ est la fonction sigmoïde suivante :
[Math.Eq(5)] $Λ \left(t\right) = \frac{{e}^{t}}{{e}^{t} + 1}$
et τ est la température, jouant le rôle de facteur d'échelle.

De même, chacun des N1 quatrièmes vecteurs est noté R^{f2}ᵢ, qui s'exprime à l'aide de l'équation (6) suivante :
[Math.Eq(6)] ${R}_{i}^{f 2} = {\left({r}_{i}^{f 2}\right)}_{i = 1}^{N 1}$
où rᵢ s'exprime par exemple (selon un exemple de réalisation particulier de la fonction d'opération de classement souple) à l'aide de l'équation (7) suivante :
[Math.Eq(7)] ${r}_{i}^{f 2} = {\sum }_{k = 1}^{N 1} Λ \left(\frac{{d}_{i}^{f 2} - {d}_{k}^{f 2}}{τ}\right)$

Lors de l'étape 307 d'application de la fonction de perte aux N1 troisièmes vecteurs R^{f1}ᵢ et aux N1 quatrièmes vecteurs R^{f2}ᵢ, la valeur calculée pour la fonction de perte est notée L(f1, f2 ; N1) et s'exprime par exemple (selon un exemple de réalisation particulier de la fonction de perte) à l'aide de l'équation (8) suivante :
[Math.Eq(8)] $L \left({f}_{1}, {f}_{2}, {N}_{1}\right) = \frac{1}{N 1} {\sum }_{i = 1}^{N 1} {\left‖\frac{{R}_{i}^{f 1}}{N 1}-\frac{{R}_{i}^{f 2}}{N 1}\right‖}^{2} = \frac{1}{N {1}^{3}} {\sum }_{i = 1}^{N 1} {\left‖{R}_{i}^{f 1}-{R}_{i}^{f 2}\right‖}^{2}$

De préférence, l'étape 308 de minimisation de cette valeur calculée L(f1, f2 ; N1) pour la fonction de perte est effectuée à l'aide d'une méthode basée sur le gradient.

Il est à noter que le procédé de transfert de connaissances selon l'invention est effectué avant (ou au plus tard simultanément à) l'entraînement du deuxième réseau de neurones multicouches 25. Comme indiqué précédemment, le premier réseau de neurones multicouches 24 est quant à lui pré-entraîné, avant la mise en œuvre du procédé de transfert de connaissances selon l'invention. Ceci permet ainsi d'utiliser les connaissances du premier réseau de neurones 24 entraîné sur un ensemble de données d'entraînement (potentiellement labellisées), pour faire apprendre au deuxième réseau de neurones 25 des représentations issues du premier réseau de neurones 24, en mettant à profit l'ensemble 26 de données de transfert (qui sont de préférence des données non labellisées). Les premier et deuxième réseaux de neurones multicouches 24, 25 peuvent être chacun entraînés de manière à réaliser des tâches identiques ou des tâches différentes mais liées.

Par conséquent, grâce au procédé de transfert de connaissances selon l'invention décrit ci-dessus, une solution est fournie pour obtenir un transfert plus précis et cohérent tout en impliquant une mise en œuvre simple et flexible, et qui permette de s'affranchir de tout problème d'inadéquation dimensionnelle en permettant un transfert de représentations entre espaces de dimensions différentes (autrement dit permettant un transfert de représentations efficient lorsque les premier et deuxième réseaux de neurones multicouches présentent des tailles différentes). Le procédé de transfert de connaissances selon l'invention requiert en outre moins de ressources de calcul comparativement aux procédés de l'art antérieur, et n'utilise pas directement la dissimilarité par paires, mais seulement une forme de hiérarchisation des dissimilarités, ce qui offre une meilleure flexibilité comparativement aux autres solutions de l'art antérieur mettant en œuvre un transfert de représentations entre des espaces de dimensions différentes.

## Revendications

1. Procédé, mis en œuvre par ordinateur (10), de transfert de connaissances d'un premier réseau de neurones multicouches (24) vers un deuxième réseau de neurones multicouches (25), l'ordinateur (10) comprenant des moyens de traitement (101) et des moyens mémoire (102) reliés aux moyens de traitement (101), les moyens mémoire (102) stockant ledit premier réseau de neurones (24), ledit deuxième réseau de neurones (25), un ensemble (26) de données de transfert, et un module de calcul (28) configuré pour appliquer sur des données au moins une métrique de dissimilarité, une fonction de perte, et une fonction d'opération de classement souple, le premier réseau de neurones (24) ayant été entraîné au préalable et présentant une série de poids synaptiques fixés, les valeurs des poids synaptiques du deuxième réseau de neurones (25) étant initialisées avec des valeurs initiales, la sortie de chaque couche du premier réseau de neurones multicouches (24) et du deuxième réseau de neurones multicouches (25) étant apte à être représentée sous forme fonctionnelle, l'ensemble (26) de données de transfert étant segmenté en plusieurs sous-ensembles de données de transfert, chaque sous-ensemble comprenant un nombre N1 de données de transfert, N1 étant un entier non nul, **caractérisé en ce que** le procédé comprend les étapes suivantes :
i) sélection (301) d'une couche du premier réseau de neurones multicouches (24), appelée première couche (C1), et d'une couche du deuxième réseau de neurones multicouches (25), appelée deuxième couche (C2) ;
ii) représentation fonctionnelle (302) de la sortie de la première couche (C1) et de la sortie de la deuxième couche (C2), la représentation fonctionnelle de la sortie de la première couche (C1) correspondant à une première fonction (f1), la représentation fonctionnelle de la sortie de la deuxième couche (C2) correspondant à une deuxième fonction (f2);
iii) pour chaque sous-ensemble de données de transfert de l'ensemble (26) de données de transfert :
a. application (303) de la première fonction (f1), respectivement de la deuxième fonction (f2), à chaque donnée dudit sous-ensemble de données de transfert, fournissant une valeur calculée de la première fonction (f1), respectivement de la deuxième fonction (f2), pour ladite donnée ;
b. application (304) d'une première métrique de dissimilarité à chaque couple possible de valeurs calculées pour la première fonction (f1), fournissant une valeur de dissimilarité pour ledit couple, l'ensemble des valeurs de dissimilarité calculées pour la première fonction (f1) étant représenté sous la forme de N1 premiers vecteurs ;
c. application (305) d'une deuxième métrique de dissimilarité à chaque couple possible de valeurs calculées pour la deuxième fonction (f2), fournissant une valeur de dissimilarité pour ledit couple, l'ensemble des valeurs de dissimilarité calculées pour la deuxième fonction (f2) étant représenté sous la forme de N1 deuxièmes vecteurs ;
d. application (306) de la fonction d'opération de classement souple aux N1 premiers vecteurs, respectivement aux N1 deuxièmes vecteurs, fournissant N1 troisièmes vecteurs, respectivement N1 quatrièmes vecteurs ;
e. application (307) de la fonction de perte aux N1 troisièmes vecteurs et aux N1 quatrièmes vecteurs, fournissant une valeur calculée pour la fonction de perte ;
f. minimisation (308) de ladite valeur calculée pour la fonction de perte, par ajustement des valeurs de poids synaptiques du deuxième réseau de neurones multicouches (25) ;
g. fixation (309) des poids synaptiques du deuxième réseau de neurones multicouches (25) sur les valeurs qui minimisent ladite valeur calculée pour la fonction de perte.

2. Procédé de transfert de connaissances selon la revendication 1, **caractérisé en ce que** les données de l'ensemble (26) de données de transfert sont des données non labellisées.

3. Procédé de transfert de connaissances selon la revendication 1 ou 2, **caractérisé en ce que** la première métrique de dissimilarité et/ou la deuxième métrique de dissimilarité consiste en un calcul de distance, typiquement en un calcul de distance euclidienne.

4. Procédé de transfert de connaissances selon l'une des revendications précédentes, **caractérisé en ce que** l'étape (308) de minimisation de la valeur calculée pour la fonction de perte est effectuée à l'aide d'une méthode basée sur le gradient.

5. Procédé de transfert de connaissances selon l'une des revendications précédentes, **caractérisé en ce que** la première couche (C1) et/ou la deuxième couche (C2) est la dernière couche ou une couche intermédiaire du premier réseau de neurones multicouches (24), respectivement du deuxième réseau de neurones multicouches (25).

6. Procédé de transfert de connaissances selon l'une des revendications précédentes, **caractérisé en ce que** le nombre de neurones et/ou de couches du deuxième réseau de neurones multicouches (25) est inférieur ou égal au nombre de neurones et/ou de couches du premier réseau de neurones multicouches (24).

7. Procédé de transfert de connaissances selon l'une des revendications précédentes, **caractérisé en ce que** la fonction de perte est une norme ou une fonction basée sur un calcul de valeur absolue.

8. Système (10) de traitement d'images, comprenant au moins une unité de traitement (20), ladite au moins une unité de traitement (20) comprenant au moins un processeur (101) et un support de stockage de données (102) et étant configurée pour recevoir en entrée une ou plusieurs images d'entrée (30) et pour fournir en sortie une ou plusieurs images traitées (40), ledit support de stockage de données (102) stockant un premier réseau de neurones multicouches (24), un deuxième réseau de neurones multicouches (25), un ensemble (26) de données de transfert, et un module de calcul (28) configuré pour appliquer sur des données au moins une métrique de dissimilarité, une fonction de perte, et une fonction d'opération de classement souple, le premier réseau de neurones (24) ayant été pré-entraîné et présentant une série de poids synaptiques fixés, les valeurs des poids synaptiques du deuxième réseau de neurones (25) étant initialisées avec des valeurs initiales, la sortie de chaque couche du premier réseau de neurones multicouches (24) et du deuxième réseau de neurones multicouches (25) étant apte à être représentée sous forme fonctionnelle, l'ensemble (26) de données de transfert étant segmenté en plusieurs sous-ensembles de données de transfert, chaque sous-ensemble comprenant un nombre N1 de données de transfert, N1 étant un entier non nul, **caractérisé en ce que** ladite au moins une unité de traitement (20) est configurée pour mettre en œuvre les étapes d'un procédé de transfert de connaissances selon l'une quelconque des revendications précédentes.

9. Système (10) de traitement d'images selon la revendication 8, **caractérisé en ce que** le support de stockage de données (102) de ladite au moins une unité de traitement (20) stocke en outre un module de prédiction (42) relié au module de calcul (28), ledit module de prédiction (42) étant configuré pour effectuer une prédiction d'au moins un paramètre relatif aux images d'entrée (30), sur la base du transfert de connaissances effectué et de ladite ou desdites image(s) d'entrée (30).

10. Programme d'ordinateur (22) comprenant des instructions de code de programme pour l'exécution des étapes d'un procédé selon l'une quelconque des revendications 1 à 7 lorsque ledit programme (22) est exécuté par au moins un processeur (101).

11. Support (102) utilisable dans un ordinateur, **caractérisé en ce qu'**un programme (22) selon la revendication 10 y est enregistré.
